# FASCICULE DE BREVET EUROPEEN

(11) **EP 1 024 049 B1**
(45) Date de publication et mention de la délivrance du brevet: **10.09.2008**
(21) Numéro de dépôt: 00400035.2
(22) Date de dépôt: 07.01.2000
(51) Int. Cl.: B60N 2/46, B60N 2/48, B60N 2/44

(54) **Dispositif de solidarisation angulaire sélective de deux pièces en rotation relative**
Selektive Vorrichtung zum drehbaren Verbinden für zwei relativ zueinander rotierenderTeile
Selective rotational coupling for two pieces in relative rotation

(30) Priorité: 03.02.1999 FR 9901211; 26.01.1999 FR 9900923
(43) Date de publication de la demande: 02.08.2000
(73) Titulaire: Ressorts Lefevere S.A., 59650 Villeneuve d'Ascq (FR)
(72) Inventeur: Patte, Damien, 51490 Epoye (FR); Etting, Bruno, 92310 Sevres (FR); Delage, Olivier, 83Bd Mac Donald, 75019 Paris (FR)
(74) Mandataire: Hennion, Jean-Claude

(56) Documents cités:
- BE-A- 390 364
- DE-A- 4 227 871
- DE-C- 4 022 840
- FR-A- 2 704 661
- GB-A- 2 023 710
- US-A- 4 621 864
- US-A- 5 597 209

## Description

La présente invention concerne un dispositif de solidarisation angulaire sélective de deux pièces en rotation relative, et plus particulièrement en rotation relative autour d'un axe depuis une première position angulaire relative où les deux pièces sont en butée pour un premier sens de rotation jusqu'à au moins une deuxième position angulaire relative, un système à cliquet permettant entre lesdites première et deuxième positions un mouvement relatif pas à pas dans le deuxième sens de rotation et empêchant le mouvement relatif dans le premier sens de rotation, des moyens étant prévus pour débrayer ledit système à cliquet lorsque les deux pièces arrivent dans leur deuxième position angulaire relative dans le deuxième sens de rotation de manière à permettre un mouvement relatif libre au moins entre les première et deuxième positions angulaires relatives.

De tels dispositifs sont connus par exemple dans le domaine des appuis-tête ou des accoudoirs pour siège de véhicules automobiles. Ces organes sont en effet généralement réglables pour assurer le confort de l'utilisateur, et également pour pouvoir être positionnés de façon optimale du point de vue de la sécurité de l'utilisateur. Dans ce qui suit, on pourra supposer que les deux pièces précitées sont le dossier du siège et, respectivement, l'appui-tête ou l'accoudoir.

Pour un appui-tête, la première position angulaire relative sera à titre d'exemple la position la plus inclinée vers l'arrière. A partir de cette position, l'appui-tête peut être ramené vers l'avant pas à pas, les crans successifs du système à cliquet imposant les différentes positions possibles. A chaque pas, l'appui-tête est bloqué vers l'arrière mais peut encore être orienté plus en avant.

Lorsque la course de réglage est entièrement parcourue, c'est à-dire lorsque l'appui-tête a atteint sa position de réglage la plus en avant - il s'agit de la deuxième position angulaire relative entre le dossier et l'appui-tête -, un déplacement supplémentaire vers l'avant entraîne le débrayage du système à cliquet de sorte que l'appui-tête peut être ramené vers l'arrière jusqu'à sa position de butée.

Dans le cas d'un accoudoir, la première position angulaire relative peut être considérée comme la position la plus basse, généralement sensiblement horizontale, et la deuxième position angulaire relative est une position inclinée vers le haut. On verra ciaprès que le cas de l'accoudoir est un peu différent de celui de l'appui-tète.

En effet, l'accoudoir doit généralement pouvoir être en outre amené dans une troisième position angulaire relative où il est sensiblement vertical, appliqué contre le dossier du siège, et où par conséquent il n'interfère pas avec l'utilisateur. Des conditions sont de plus imposées pour des raisons de sécurité pour le déverrouillage de l'accoudoir depuis cette troisième position.

Divers dispositifs de positionnement d'accessoires de ce type existent dans l'état de la technique. Ces dispositifs connus comportent souvent, notamment en ce qui concerne les accoudoirs, un levier ou un bouton de manoeuvre permettant de libérer à volonté l'appui-tête ou l'accoudoir pour permettre son réglage.

On connaît également par le document FR-A-2 737 263 un dispositif automatique de guidage indexé d'une pièce mobile articulée autour d'un axe sur une pièce fixe. Ce dispositif utilise un cliquet oscillant et des moyens élastiques encliquetables pour assurer le maintien du cliquet dans ses différentes positions fonctionnelles. Un tel agencement présente l'inconvénient d'être relativement difficile à industrialiser et assez peu fiable.

La présente invention vise à pallier ces inconvénients.

Plus particulièrement, l'invention a pour but de fournir un dispositif de solidarisation angulaire sélective de deux pièces en rotation relative dont la fabrication soit aisée et qui soit peu coûteux.

A cet effet, l'invention a pour objet un dispositif de solidarisation angulaire sélective de deux pièces en rotation relative autour d'un axe depuis une première position angulaire relative où les deux pièces sont en butée pour un premier sens de rotation jusqu'à au moins une deuxième position angulaire relative, un système à cliquet permettant entre lesdites première et deuxième positions un mouvement relatif pas à pas dans le deuxième sens de rotation et empêchant le mouvement relatif dans le premier sens de rotation, des moyens étant prévus pour débrayer ledit système à cliquet lorsque les deux pièces arrivent dans leur deuxième position angulaire relative dans le deuxième sens de rotation de manière à permettre un mouvement relatif libre au moins entre les première et deuxième positions angulaires relatives,
caractérisé par le fait que ledit système à cliquet comprend
un premier secteur denté solidaire d'une première desdites deux pièces, centré sur ledit axe, et une première came montée sur ladite première pièce,
un coulisseau monté coulissant sur la deuxième pièce, ledit coulisseau portant un deuxième secteur denté susceptible de coopérer avec le premier secteur denté, et un doigt suiveur de came,
et des premiers moyens élastiques agencés pour exercer sur le coulisseau un effort tendant à amener les premier et deuxième secteurs dentés en engrènement,
les dents des premier et deuxième secteurs dentés étant respectivement agencées de sorte que, lorsque les premier et deuxième secteurs dentés sont en engrènement sous l'action des premiers moyens élastiques, les dents du premier et du deuxième secteurs bloquent le mouvement relatif dans le premier sens de rotation mais autorisent le mouvement relatif pas à pas dans le deuxième sens de rotation en permettant au deuxième secteur d'être repoussé à l'écart du premier secteur contre l'action des premiers moyens élastiques,
la première came étant agencée pour coopérer avec le doigt suiveur de came de sorte que les premier et deuxième secteurs dentés viennent en engrènement dès lors que les deux pièces viennent dans leur première position relative, et hors engrènement dès lors que les deux pièces viennent dans leur deuxième position relative.

Le dispositif de l'invention comporte par conséquent un système à cliquet coulissant, plus facile à réaliser et plus fiable que celui de l'art antérieur.

Dans le cas où l'une des pièces est le dossier d'un siège de véhicule automobile et où l'autre pièce est un accoudoir, celui-ci peut être réglé pas à pas en inclinaison à partir d'une position basse. Lorsqu'il atteint sa position de réglage la plus haute, le système à cliquet se débraye et l'accoudoir peut être ramené en position basse.

Dans un mode de réalisation particulier, ladite première came comprend
une première surface de came qui, lorsque le doigt suiveur de came est en appui sur cette première surface sous l'action des premiers moyens élastiques, empêche le deuxième secteur denté de venir engrener avec le premier secteur,
un premier moyen d'échappement qui, lorsque les deux pièces sont dans leur première position angulaire relative, permet au doigt suiveur de came d'échapper à la première surface de came,
un premier moyen d'enclenchement qui, lorsque les deux pièces sont dans leur deuxième position angulaire relative, permet au doigt suiveur de came de venir en contact avec la première surface de came lorsque le mouvement relatif des deux pièces passe du deuxième au premier sens de rotation.

Plus particulièrement, le premier moyen d'échappement peut comprendre une interruption de la première surface de came à l'emplacement où se trouve le doigt suiveur de came lorsque les deux pièces sont dans leur première position angulaire relative.

Egalement dans un mode de réalisation particulier, la première came est montée oscillante sur ladite première pièce, et les premiers moyens d'enclenchement comprennent une deuxième surface de came agencée pour coopérer avec le doigt suiveur de came pour provoquer une oscillation de la came contre l'action de deuxièmes moyens élastiques.

Encore plus particulièrement, la première et la deuxième surfaces de came peuvent se rejoindre à une première extrémité de la première came où se trouve le doigt suiveur de came lorsque les deux pièces sont dans leur deuxième position angulaire relative, de sorte que, lorsque les deux pièces se rapprochent pas à pas de leur deuxième position angulaire relative dans le deuxième sens de rotation, la première came oscille dans un premier sens du fait de l'action du doigt suiveur de came sur la deuxième surface de came, puis oscille dans le deuxième sens sous l'action des deuxièmes moyens élastiques lorsque le doigt suiveur de came atteint ladite extrémité de la première came, et que le doigt suiveur s'engage sur la première surface de came lorsque le mouvement relatif des deux pièces est inversé et que les deux pièces se déplacent librement, dans un premier temps au moins dans le premier sens de rotation.

Dans ce cas, ladite première came peut être formée d'une languette élastique, les première et deuxième surfaces de came se rejoignant à une extrémité libre de la languette et l'autre extrémité de la languette étant solidaire de la première pièce, les deuxièmes moyens élastiques étant constitués par la languette elle-même.

Un tel agencement permet de réaliser le système à cliquet particulièrement simplement.

Plus particulièrement, une butée peut être prévue à l'extrémité libre de ladite languette élastique pour limiter son mouvement dans le deuxième sens d'oscillation lorsque le doigt suiveur de came est en appui sur la première surface de came sous l'action des premiers moyens élastiques.

Dans un mode de réalisation particulier, les deux pièces sont en outre librement mobiles en rotation relative entre la deuxième position angulaire relative et une troisième position angulaire relative située au-delà de la deuxième position angulaire relative par rapport à la première position angulaire relative, des moyens de blocage déverrouillables étant prévus pour bloquer le mouvement relatif entre les deux pièces lorsqu'elles sont dans leur troisième position angulaire relative.

Dans le cas d'un accoudoir, ce dernier peut ainsi être amené en position verticale et bloqué dans cette position.

Lesdits moyens de blocage peuvent comprendre le doigt suiveur de came et un renfoncement formé dans un organe solidaire de la première pièce à l'emplacement où se trouve le doigt suiveur de came lorsque les deux pièces sont dans leur troisième position angulaire relative, de sorte que le doigt suiveur de came pénètre dans le renfoncement sous l'action des premiers moyens élastiques lorsque les deux pièces arrivent dans leur troisième position angulaire relative.

Une troisième surface de came peut en outre être formée sur un organe solidaire de la première pièce, agencée pour coopérer avec le doigt suiveur de came pour retenir le mouvement du coulisseau sous l'action des premiers moyens élastiques, et empêcher l'engrènement des deux secteurs dentés lorsque les deux pièces sont dans une position angulaire relative comprise entre leur deuxième et leur troisième position angulaire relative en venant de la deuxième position angulaire relative.

Plus particulièrement, des moyens de déverrouillage des moyens de blocage du mouvement relatif entre les deux pièces lorsqu'elles sont dans leur troisième position angulaire relative, peuvent comprendre le flanc incliné dudit renfoncement situé du côté du renfoncement opposé à la troisième surface de came, agencé pour coopérer avec le doigt suiveur de came pour repousser le coulisseau contre l'action des premiers moyens élastiques lorsque le mouvement relatif entre les deux pièces est poursuivi au-delà de leur troisième position angulaire relative contre l'action de troisièmes moyens élastiques, et des moyens d'inhibition pour empêcher le doigt suiveur de came de revenir dans le renfoncement lorsque les deux pièces sont ramenées vers leur troisième position angulaire relative.

Dans le cas d'un accoudoir, on peut ainsi le déverrouiller de sa position haute en le ramenant vers l'arrière contre l'action d'un ressort, et le ramener ensuite vers sa position la plus basse avant de procéder au réglage de sa position.

Plus particulièrement, les moyens d'inhibition peuvent comprendre une deuxième came oscillante agencée pour être repoussée contre l'action de quatrièmes moyens élastiques par le doigt suiveur de came lorsque ce dernier coopère avec le flanc incliné du renfoncement, et pour revenir sur l'ouverture du renfoncement sous l'action des quatrièmes moyens élastiques lorsque le doigt suiveur de came est sorti du renfoncement.

Encore plus particulièrement, la deuxième came oscillante peut comporter une quatrième surface de came faisant face du côté opposé au renfoncement pour coopérer avec le doigt suiveur de came lorsque les deux pièces sont dans une position angulaire relative comprise entre leur deuxième et leur troisième position angulaire relative en venant de la troisième position angulaire relative pour retenir le mouvement du coulisseau sous l'action des premiers moyens élastiques, et empêcher l'engrènement des deux secteurs dentés.

Egalement dans un mode de réalisation particulier, les quatrièmes moyens élastiques comprennent un ressort hélicoïdal dont l'axe est disposé sensiblement en arc de cercle centré sur l'axe de rotation relative des deux pièces, ressort dont chaque extrémité est en appui sur une butée solidaire de l'une des deux pièces.

L'invention a également pour objet un accoudoir, notamment pour siège de véhicule automobile, caractérisé par le fait qu'il comporte un dispositif de solidarisation angulaire sélective tel que décrit ci-dessus, ladite première position angulaire relative étant celle correspondant à la position basse de l'accoudoir et ladite deuxième position angulaire relative étant celle correspondant à la plus haute des positions de réglage de l'accoudoir.

On verra ci-après que la troisième position angulaire relative est celle où l'accoudoir est en position sensiblement verticale.

Dans un mode de réalisation particulier, un axe de rotation solidaire du dossier du siège constitue la première desdites deux pièces, et une armature d'accoudoir constitue la deuxième desdites deux pièces.

On décrira maintenant, à titre d'exemple non limitatif, un mode de réalisation particulier de l'invention, en référence aux dessins schématiques annexés dans lesquels :
- la figure 1 est une vue de dessus d'un dispositif selon la présente invention ;
- la figure 2 est une vue de dessus de l'ensemble de cames de ce dispositif ;
- la figure 3 est une vue de dessous du coulisseau de ce dispositif ;

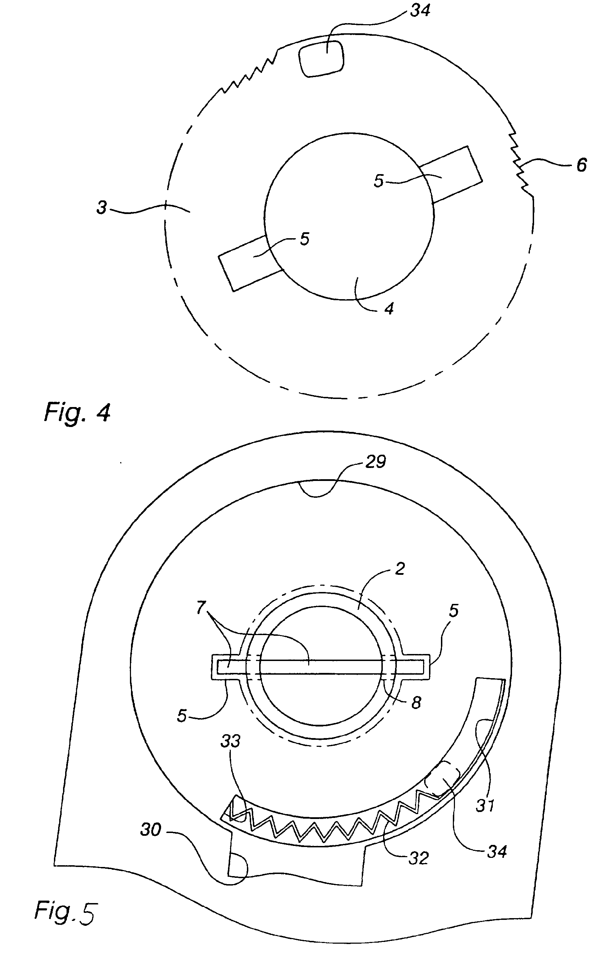

- la figure 4 est une vue de dessous de la roue dentée de ce dispositif ;
- la figure 5 est une vue de dessus de certains autres éléments de ce dispositif ; et
- les figures 6a à 6e sont des vues partielles de dessus illustrant le dispositif dans plusieurs phases de son fonctionnement.

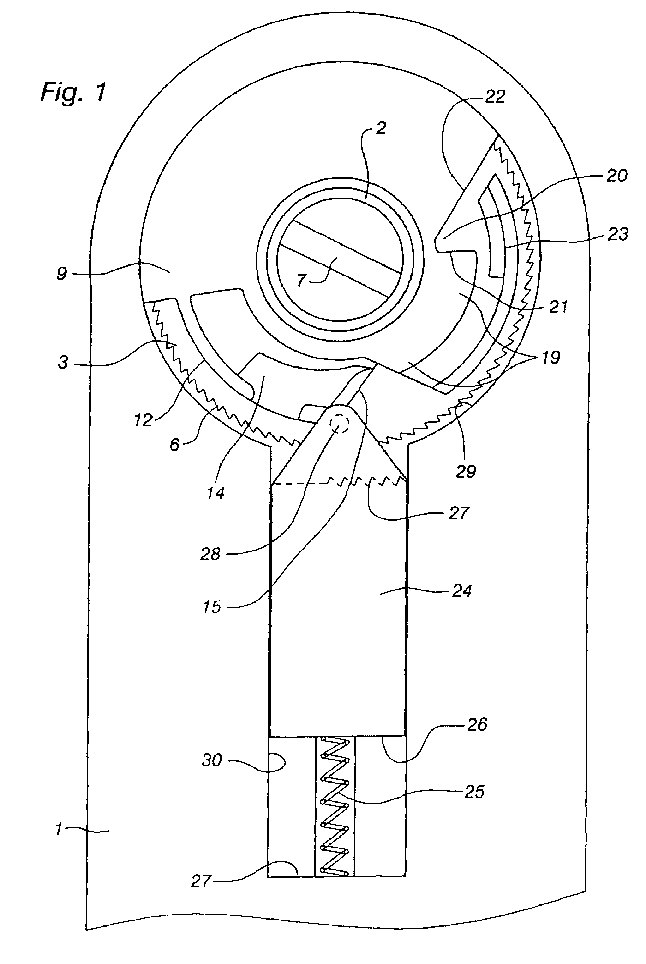

On voit à la figure 1 une armature 1 d'accoudoir de siège de véhicule automobile munie du dispositif selon l'invention et destinée à être recouverte d'une garniture de type connu. Cette armature est montée à rotation autour d'un axe tubulaire 2 solidaire du dossier du siège. Cet axe 2 fait saillie de l'armature 1 d'accoudoir du côté opposé au point de vue de la figure 1.

On considérera dans ce qui suit que l'axe 2 et les organes qui en sont solidaires sont fixes alors que les autres organes du dispositif sont mobiles autour de l'axe.

Il est par ailleurs à noter que la figure 1 représente l'armature 1 d'accoudoir dans une position inclinée relativement proche de l'horizontale, et que ce n'est que par commodité qu'elle est ici dessiné verticalement.

Parmi les pièces solidaires de l'axe 2 figure en premier lieu une roue dentée 3 formée pour l'essentiel d'un disque métallique comportant un orifice circulaire central 4 agencé pour recevoir l'axe 2. Diamétralement opposés par rapport à l'axe, la roue dentée 3 forme deux évidements radiaux 5 débouchant dans l'orifice 4.

La roue dentée 3 comporte sur une partie de sa périphérie une denture 6. Les dents de la denture 6 sont inclinées de manière que la roue dentée 3 forme un cliquet avec un organe correspondant qui sera décrit ci-après.

Une tige 7 traverse deux trous 8 percés de façon diamétralement opposée dans la paroi de l'axe 2. Cette tige 7 dépasse radialement de l'axe 2 de manière que ses extrémités s'engagent dans les évidements 5 lorsque la roue dentée 3 est montée sur l'axe 2. Ainsi, la roue dentée 3 est solidaire de l'axe 2 et est donc fixe.

Un ensemble 9 de cames généralement en forme de disque est également monté solidaire de l'axe 2 par l'intermédiaire de la roue dentée 3. L'ensemble 9 est ici réalisé d'une seule pièce en matière synthétique moulée. Les cames sont généralement coaxiales à l'axe 2.

L'ensemble 9 comprend pour l'essentiel deux groupes de cames 10 et 11, disposés chacun circonférentiellement autour de l'axe 2. Le groupe de cames 10 est formé sur une languette élastique 12, dont une extrémité est reliée à l'ensemble 9. Le groupe de cames 11 est formé en partie directement sur l'ensemble 9 et en partie sur une languette élastique 13, dont une extrémité est reliée à l'ensemble 9

La languette élastique 12 supporte à son extrémité libre, par l'intermédiaire d'un voile 14 de rigidification perpendiculaire à l'axe 2, une première surface de came cylindrique convexe 15 orientée vers l'extérieur par rapport à l'axe 2 et une deuxième surface de came cylindrique concave 16 orientée vers l'intérieur par rapport à l'axe 2. Les deux surfaces de came 15 et 16 se rejoignent à l'extrémité libre de l'ensemble 9 pour former un bec 17 incliné radialement vers l'axe 2. Du côté des surfaces de came 15 et 16 opposées au bec 17, ces surfaces forment une interruption 18.

La pointe du bec 17 forme une butée limitant le mouvement de la languette 12 en direction de l'axe 2 sous l'action des moyens élastiques qui seront décrits ci-après.

Le groupe de cames 11 comporte en premier lieu une troisième surface de came 19 cylindrique convexe coaxiale à l'axe 2. Cette surface de came 19 se trouve, du côté du groupe de cames 10, dans le prolongement des surfaces de cames 15 et 16.

A l'opposé des surfaces de cames 15 et 16, la troisième surface de came 19 se termine par un renfoncement 20 dont la concavité est dirigée vers l'extérieur, à l'opposé de l'axe 2. Ce renfoncement 20 comporte, du côté de la surface de came 19, un flanc 21 sensiblement radial, et du côté opposé un flanc 22 incliné dans l'autre direction.

La languette élastique 13 forme en outre, de son côté extérieur, une quatrième surface de came cylindrique convexe 23 extérieure par rapport à l'axe 2.

L'extrémité de la languette 13 forme une butée limitant le mouvement de la languette 13 en direction de l'axe 2 sous l'action des moyens élastiques qui seront décrits ci-après.

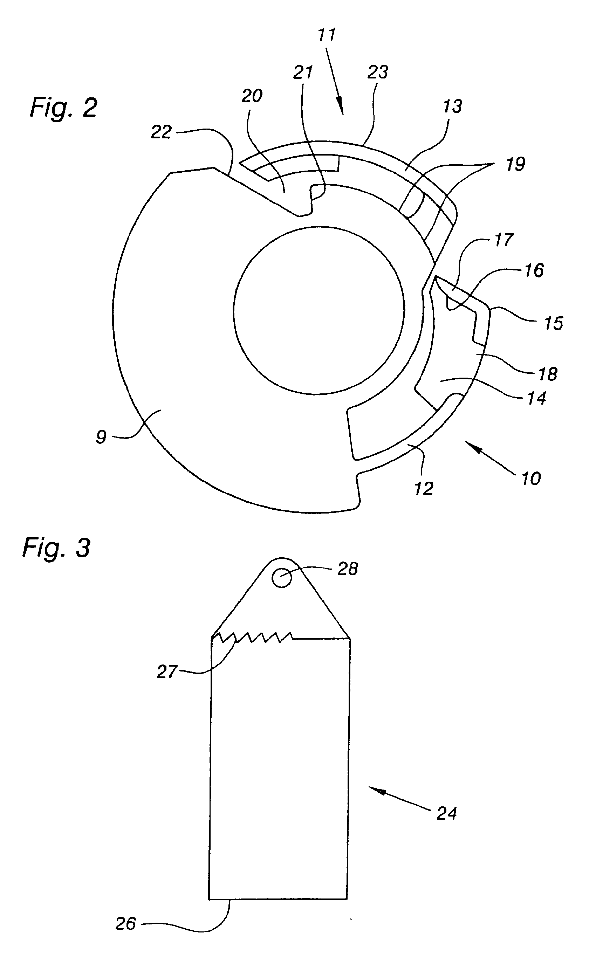

Si l'on se réfère maintenant aux figures 1 et 3 en particulier, on voit un coulisseau 24 mobile dans une direction sensiblement radiale par rapport à l'axe 2. Ce coulisseau est pressé vers l'axe 2 par un ressort hélicoïdal 25 en appui d'une part sur une surface d'appui extérieure 26 du coulisseau 24 et d'autre part sur une surface d'appui 27 de l'armature 1.

Comme on peut le voir à la figure 3, le coulisseau 24 comporte sur sa face inférieure un secteur denté comportant une denture 27 susceptible de coopérer avec la denture 6 de la roue dentée 3. Les dents de la denture 27 sont inclinées de manière que la roue dentée 3 forme un cliquet avec le coulisseau 24.

L'inclinaison des dents des dentures 6 et 27 est telle que, lorsque les dentures sont engrenées, un mouvement de rotation de l'armature 1 soit néanmoins possible dans le sens d'une inclinaison progressive de l'armature 1 (sens contraire de celui des aiguilles d'un montre sur la figure 1), les dents de la denture 6 repoussant à chaque cran les dents de la denture 27, et donc le coulisseau 24, contre l'action du ressort 25. Le mouvement en sens contraire est en revanche impossible.

Le coulisseau 24 comporte en outre, sur cette même face inférieure, un doigt suiveur de came 28 agencé pour coopérer avec les surfaces de came précitées.

Lorsqu'ils sont montés sur l'axe 2, la roue dentée 3 et l'ensemble 9 de cames sont logés dans un logement cylindrique 29 de l'armature 1. Le coulisseau 24 est agencé pour coulisser dans une rainure 30 de l'armature 1 débouchant radialement dans le logement cylindrique 29.

Un logement annulaire 31 est formé au fond du logement cylindrique 29, coaxialement à ce logement 29, et reçoit un ressort hélicoïdal 32. Le ressort hélicoïdal 32 est en butée d'une part sur une surface d'extrémité 33 du logement 32 et d'autre part sur une saillie 34 solidaire de l'axe 2.

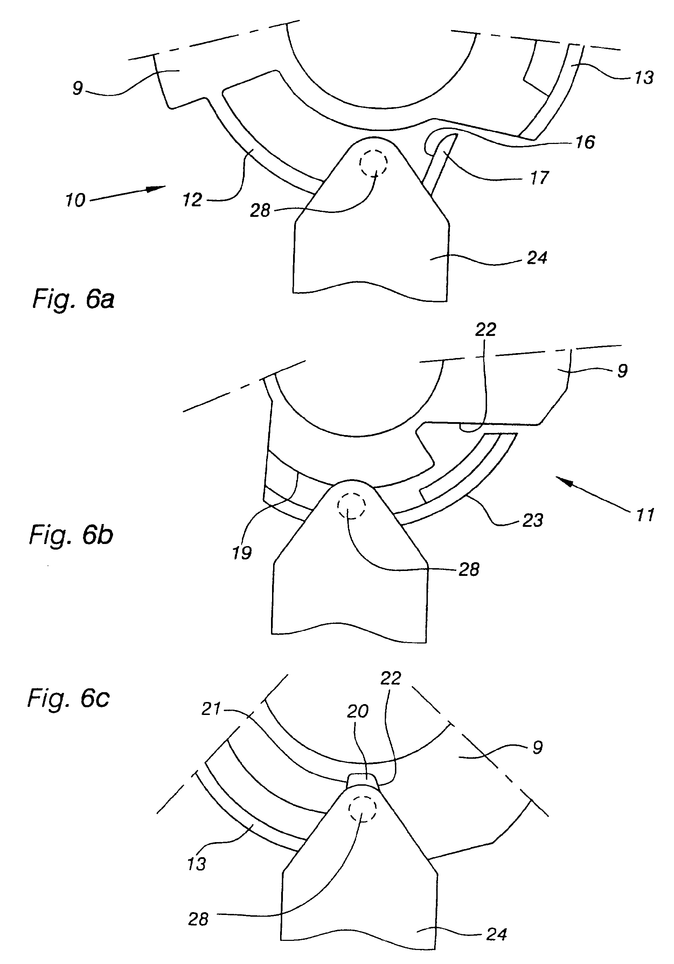

On voit sur les figures 1 et 6a à 6e le fonctionnement du dispositif qui vient d'être décrit.

Dans la position de la figure 6a, l'accoudoir est en butée dans sa position de réglage la plus basse.

Dans cette position, le doigt suiveur de came 28 est engagé dans l'interruption 18 de la surface de came 15 de sorte que le ressort 25 presse le coulisseau 24 en direction de l'axe 2. Les dentures 6 et 27 sont donc engrenées et le cliquet entre en état de fonctionnement.

L'armature 1 d'accoudoir peut à partir de ce point être progressivement levée en la faisant pivoter dans le sens contraire des aiguilles d'une montre, l'armature se trouvant bloquée à chaque dent contre un mouvement dans l'autre sens. Au cours de ce mouvement, le doigt suiveur de came 28 reste sous la surface de came 16 qu'il soulève à l'écart de l'axe 2 lorsqu'il arrive à l'extrémité du bec 17.

Lorsque les surfaces de came 15 et 16 sont retombées en direction de l'axe 2 sous l'effet de l'élasticité de la languette 12 et que le mouvement est poursuivi, le doigt suiveur de came 28 s'engage sous la languette élastique 13, dans la position représentée à la figure 6b.

Dans cette position, le doigt suiveur de came 28 est en appui sur la surface de came 19. Ainsi, la denture 27 est maintenue à l'écart de la denture 6 de sorte que l'armature 1 peut se mouvoir librement dans les deux sens.

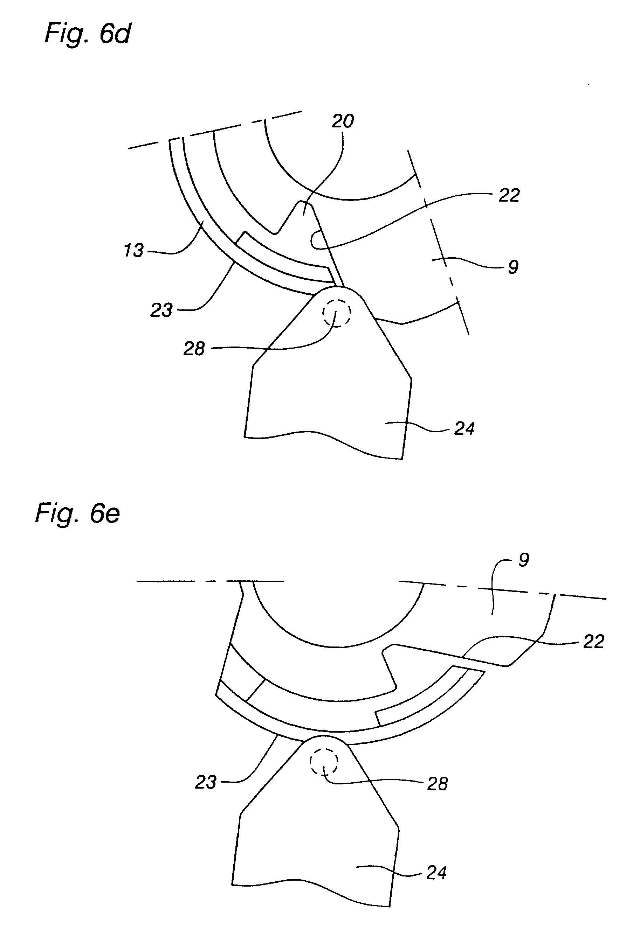

Si le mouvement est inversé et qu'à ce stade l'armature 1 est redéplacée dans le sens des aiguilles d'une montre, le doigt suiveur de came 28 revient au début de la surface de came 19 et s'engage sur la surface de came 15 sensiblement dans la position de la figure 1. Dans cette position, l'armature 1 peut également se mouvoir librement dans les deux sens de sorte que l'on peut alors se déplacer sans interruption dans les deux sens entre les positions des figures 6a et 6d, à l'exception de ces deux positions elles-mêmes.

Si en revanche le mouvement est poursuivi dans le sens contraire de celui des aiguilles d'une montre, le dispositif arrive dans la position représentée à la figure 6c.

Dans cette position, le doigt suiveur de came 28 s'engage dans le renfoncement 20 sous l'action du ressort 25. Du fait que le flanc 21 de ce renfoncement est radial, et donc abrupt, le doigt est bloqué dans le sens du retour vers les positions précédemment décrites. Tout mouvement de l'armature 1 dans le sens des aiguilles d'une montre est ainsi rendu impossible, l'armature 1 et l'axe 2 ayant donc atteint leur troisième position angulaire relative.

En revanche, la poursuite du mouvement dans le sens contraire de celui des aiguilles d'une montre est toujours possible du fait de l'inclinaison du flanc 22 du renfoncement 20, comme montré à la figure 6d.

Cette poursuite du mouvement s'effectue contre l'action du ressort 32, la longueur de ce ressort et la position des butées 33 et 34 étant telles que le ressort commence juste à se trouver en compression lorsque l'armature 1 et l'axe 2 sont dans leur troisième position angulaire relative. La raideur du ressort 32 est calibrée de sorte que l'effort à exercer sur l'accoudoir soit relativement important pour dépasser la troisième position angulaire relative. Il n'existe donc sensiblement pas de risque de déverrouillage intempestif de l'accoudoir dans cette position.

Au cours de ce mouvement de déverrouillage, le doigt suiveur de came 28 monte contre l'action du ressort 25 sur la rampe formée par le flanc 22 du renfoncement, en écartant l'extrémité de la languette 13 de l'axe 2. A un certain point, cette extrémité échappe au doigt 28 et la languette 13 revient vers l'axe sous l'effet de son élasticité. L'intervalle entre l'extrémité de la surface de came 23 et la rampe 22 est ainsi comblé.

Le sens du mouvement peut alors être inversé et le doigt suiveur de came 28 s'engage sur la surface de came 23 dans la position représentée à la figure 6e.

Dans cette position, le doigt suiveur de came 28 est en appui sur la surface de came 23. Ainsi, la denture 27 est maintenue à l'écart de la denture 6 de sorte que l'armature 1 peut se mouvoir librement dans les deux sens, comme dans la position de la figure 6b.

Si le mouvement de l'armature 1 est poursuivi dans le sens des aiguilles d'une montre, le doigt suiveur de came 28 finit par échapper à la surface de came 23 pour retomber sous l'action du ressort 25 sur l'extrémité de la surface de came 15, en repassant provisoirement sur l'extrémité de la surface de came 19.

Comme montré à la figure 1, la surface de came 15 empêche toujours les dentures 6 et 27 d'engrener, de sorte qu'un mouvement libre dans les deux sens est toujours possible, jusqu'à ce que le doigt suiveur de came 28 atteigne l'interruption 18 de la surface 15 et que le dispositif revienne dans la position de la figure 6a.

## Revendications

1. Dispositif de solidarisation angulaire sélective de deux pièces (1, 2) en rotation relative autour d'un axe depuis une première position angulaire relative où les deux pièces sont en butée pour un premier sens de rotation jusqu'à au moins une deuxième position angulaire relative, un système à cliquet permettant entre lesdites première et deuxième positions un mouvement relatif pas à pas dans le deuxième sens de rotation et empêchant le mouvement relatif dans le premier sens de rotation, des moyens étant prévus pour débrayer ledit système à cliquet lorsque les deux pièces arrivent dans leur deuxième position angulaire relative dans le deuxième sens de rotation de manière à permettre un mouvement relatif libre au moins entre les première et deuxième positions angulaires relatives,
**caractérisé par le fait que** ledit système à cliquet comprend
un premier secteur denté (6) solidaire d'une (2) première desdites deux pièces, centré sur ledit axe, et une première came (15, 16) montée sur ladite première pièce,
un coulisseau (24) monté coulissant sur la deuxième pièce, ledit coulisseau portant un deuxième secteur denté (27) susceptible de coopérer avec le premier secteur denté, et un doigt (28) suiveur de came,
et des premiers moyens élastiques (25) agencés pour exercer sur le coulisseau un effort tendant à amener les premier et deuxième secteurs dentés en engrènement,
les dents des premier et deuxième secteurs dentés (6,27) étant respectivement agencées de sorte que, lorsque les premier et deuxième secteurs dentés (6,27) sont en engrènement sous l'action des premiers moyens élastiques (25), les dents du premier et du deuxième secteurs bloquent le mouvement relatif dans le premier sens de rotation mais autorisent le mouvement relatif pas à pas dans le deuxième sens de rotation en permettant au deuxième secteur (27) d'être repoussé à l'écart du premier secteur (6) contre l'action des premiers moyens élastiques (25).
la première came (15,16) étant agencée pour coopérer avec le doigt (28) suiveur de came de sorte que les premier et deuxième secteurs dentés (6,27) viennent en engrènement dès lors que les deux pièces (1,2) viennent dans leur première position relative, et hors engrènement dès lors que les deux pièces (1,2) viennent dans leur deuxième position relative.

2. Dispositif selon la revendication 1, dans lequel ladite première came comprend
une première surface de came (15) qui, lorsque le doigt (28) suiveur de came est en appui sur cette première surface sous l'action des premiers moyens élastiques (25), empêche le deuxième secteur (27) denté de venir engrener avec le premier secteur (6),
un premier moyen d'échappement (18) qui, lorsque les deux pièces sont dans leur première position angulaire relative, permet au doigt suiveur de came d'échapper à la première surface de came,
un premier moyen d'enclenchement (16) qui, lorsque les deux pièces sont dans leur deuxième position angulaire relative, permet au doigt suiveur de came de venir en contact avec la première surface de came lorsque le mouvement relatif des deux pièces passe du deuxième au premier sens de rotation.

3. Dispositif selon la revendication 2, dans lequel le premier moyen d'échappement comprend une interruption (18) de la première surface de came à l'emplacement où se trouve le doigt (25) suiveur de came lorsque les deux pièces sont dans leur première position angulaire relative.

4. Dispositif selon l'une quelconque des revendications 2 et 3, dans lequel la première came (15, 16) est montée oscillante sur ladite première pièce (2), et les premiers moyens d'enclenchement comprennent une deuxième surface de came (16) agencée pour coopérer avec le doigt (28) suiveur de came pour provoquer une oscillation de la première came contre l'action de deuxièmes moyens élastiques (12).

5. Dispositif selon la revendication 4, dans lequel la première (15) et la deuxième (16) surfaces de came se rejoignent à une première extrémité de la première came où se trouve le doigt suiveur de came lorsque les deux pièces sont dans leur deuxième position angulaire relative, de sorte que, lorsque les deux pièces se rapprochent pas à pas de leur deuxième position angulaire relative dans le deuxième sens de rotation, la première came (15, 16) oscille dans un premier sens du fait de l'action du doigt (28) suiveur de came sur la deuxième surface de came (16), puis oscille dans le deuxième sens sous l'action des deuxièmes moyens élastiques (12) lorsque le doigt suiveur de came atteint ladite extrémité de la première came, et que le doigt suiveur s'engage sur la première surface de came (15) lorsque le mouvement relatif des deux pièces est inversé et que les deux pièces se déplacent librement, dans un premier temps au moins, dans le premier sens de rotation.

6. Dispositif selon la revendication 5, dans lequel ladite première came est formée d'une languette élastique (12), les première (15) et deuxième (16) surfaces de came se rejoignant à une extrémité libre de la languette et l'autre extrémité de la languette étant solidaire de la première pièce (2), les deuxièmes moyens élastiques étant constitués par la languette elle-même.

7. Dispositif selon la revendication 6, dans lequel une butée est prévue à l'extrémité libre de ladite languette élastique pour limiter son mouvement dans le deuxième sens d'oscillation lorsque le doigt suiveur de came est en appui sur la première surface de came sous l'action des premiers moyens élastiques.

8. Dispositif selon l'une quelconque des revendications 1 à 7, dans lequel les deux pièces (1, 2) sont en outre librement mobiles en rotation relative entre la deuxième position angulaire relative et une troisième position angulaire relative située au-delà de la deuxième position angulaire relative par rapport à la première position angulaire relative, des moyens de blocage (20, 28) déverrouillables étant prévus pour bloquer le mouvement relatif entre les deux pièces lorsqu'elles sont dans leur troisième position angulaire relative.

9. Dispositif selon la revendications 8, dans lequel lesdits moyens de blocage comprennent le doigt (28) suiveur de came et un renfoncement (20) formé dans un organe (9) solidaire de la première pièce (2) à l'emplacement où se trouve le doigt suiveur de came lorsque les deux pièces sont dans leur troisième position angulaire relative, de sorte que le doigt suiveur de came pénètre dans le renfoncement sous l'action des premiers moyens élastiques (25) lorsque les deux pièces arrivent dans leur troisième position angulaire relative.

10. Dispositif selon la revendication 9, dans lequel une troisième surface de came (19) est formée sur un organe (9) solidaire de la première pièce, agencée pour coopérer avec le doigt (28) suiveur de came pour retenir le mouvement du coulisseau (24) sous l'action des premiers moyens élastiques (25), et empêcher l'engrènement des deux secteurs dentés (6, 27) lorsque les deux pièces sont dans une position angulaire relative comprise entre leur deuxième et leur troisième position angulaire relative en venant de la deuxième position angulaire relative.

11. Dispositif selon l'une quelconque des revendications 9 et 10, dans lequel des moyens de déverrouillage des moyens de blocage du mouvement relatif entre les deux pièces lorsqu'elles sont dans leur troisième position angulaire relative, comprennent le flanc (22) incliné dudit renfoncement (20) situé du côté du renfoncement opposé à la troisième surface de came (19), agencé pour coopérer avec le doigt (28) suiveur de came pour repousser le coulisseau (24) contre l'action des premiers moyens élastiques (25) lorsque le mouvement relatif entre les deux pièces est poursuivi au-delà de leur troisième position angulaire relative contre l'action de troisièmes moyens élastiques (13), et des moyens d'inhibition (23) pour empêcher le doigt suiveur de came de revenir dans le renfoncement lorsque les deux pièces sont ramenées vers leur troisième position angulaire relative.

12. Dispositif selon la revendication 11, dans lequel les moyens d'inhibition comprennent une deuxième came oscillante (13, 23) agencée pour être repoussée contre l'action de quatrièmes moyens élastiques (32) par le doigt (28) suiveur de came lorsque ce dernier coopère avec le flanc incliné (22) du renfoncement, et pour revenir sur l'ouverture du renfoncement sous l'action des quatrièmes moyens élastiques lorsque le doigt suiveur de came est sorti du renfoncement.

13. Dispositif selon la revendication 12, dans lequel la deuxième came oscillante comporte une quatrième surface de came (23) faisant face du côté opposé au renfoncement (20) pour coopérer avec le doigt (28) suiveur de came lorsque les deux pièces sont dans une position angulaire relative comprise entre leur deuxième et leur troisième position angulaire relative en venant de la troisième position angulaire relative pour retenir le mouvement du coulisseau (24) sous l'action des premiers moyens élastiques (25), et empêcher l'engrènement des deux secteurs dentés (6, 27).

14. Dispositif selon l'une quelconque des revendications 12 et 13, dans lequel les quatrièmes moyens élastiques comprennent un ressort hélicoïdal (32) dont l'axe est disposé sensiblement en arc de cercle centré sur l'axe de rotation relative des deux pièces, ressort dont chaque extrémité est en appui sur une butée (33, 34) solidaire de l'une des deux pièces.

15. Accoudoir, notamment pour siège de véhicule automobile, **caractérisé par le fait qu'**il comporte un dispositif de solidarisation angulaire sélective selon l'une quelconque des revendications 1 à 14, ladite première position angulaire relative étant celle correspondant à la position basse de l'accoudoir et ladite deuxième position angulaire relative étant celle correspondant à la plus haute des positions de réglage de l'accoudoir.

16. Accoudoir selon la revendication 15, dans lequel un axe de rotation (2) solidaire du dossier du siège constitue la première desdites deux pièces, et une armature (1) d'accoudoir constitue la deuxième desdites deux pièces.

## Claims

1. Device of selective angular solidarisation of two parts (1, 2) in relative rotation around an axis from a first relative angular position where the two parts are into abutment for a first direction of rotation until at least a second relative angular position, a pawl system allowing between the aforementioned first and second positions a relative movement step by step in the second direction of rotation and preventing the relative movement in the first direction of rotation, means being designed to disengage the aforementioned pawl system when the two parts come into their second relative angular position in the second direction of rotation so as to allow a free relative movement at least between the first and second relative angular positions, wherein said pawl system comprises :
- a first toothed segment (6) interdependent of a first one (2) of the aforesaid two parts, centred on the aforementioned axis, and a first cam (15, 16) assembled on the aforementioned first part,
- a sliding member (24) assembled so as to slide on the second part, the aforementioned sliding member carrying a second toothed segment (27) suitable for cooperation with the first toothed segment, and a cam follower finger (28),
- and first elastic means (25) arranged to exert on the sliding member an effort tending to bring the first and second toothed segments in engagement,
the teeth of the first and second toothed segments (6, 27) being respectively arranged so that, when the first and second toothed segments (6, 27) are in engagement under the action of the first elastic means (25), the teeth of the first and the second segments block the relative movement in the first direction of rotation but authorize the relative movement step by step in the second direction of rotation by allowing the second segment (27) to be pushed back apart from the first segment (6) against the action of the first elastic means (25),
the first cam (15, 16) being arranged to cooperate with the cam follower finger (28) so that the first and second toothed segments (6, 27) come into engagement when the two parts (1, 2) come into their first relative position, and disengagement when the two parts (1, 2) come into their second relative position.

2. Device according to claim 1, wherein said first cam comprises:
- a first cam surface (15) which, when the cam follower finger (28) rests upon this first cam surface under the action of the first elastic means (25), prevents the second toothed segment (27) from coming into engagement with the first segment (6),
- a first escaping means (18) which, when the two parts are in their first relative angular position, allows the cam follower finger to escape from the first cam surface,
- a first engagement means (16) which, when the two parts are in their second relative angular position, allows the cam follower finger to come into contact with the first cam surface when the relative movement of the two parts goes from the second to the first direction of rotation.

3. Device according to claim 2, wherein the first escaping means comprises an interruption (18) of the first cam surface at the place where is the cam follower finger (28) when the two parts are in their first relative angular position.

4. Device according to any of claims 2 and 3, wherein the first cam (15, 16) is assembled oscillating onto the said first piece (2) et the first engagement means comprise a second cam surface (16) suitable for cooperation with the cam follower finger (28) in order to cause an oscillation of the first cam against the action second elastic means (12).

5. Device according to claim 4, wherein the first (15) and the second (16) cam surfaces meet at a first end of the first cam where the cam follower finger is when the two parts are in their second relative angular position, so that, when the two parts approach step by step their second relative angular position in the second direction of rotation, the first cam (15,16) oscillates in a first direction because of action of the cam follower finger (28) on the second cam surface (16), then oscillates in the second direction under the action of the second elastic means (12) when the cam follower finger reaches the aforementioned end of the first cam, and that the follower finger engages on the first cam surface (15) when the relative movement of the two parts is reversed and that the two parts move freely, initially at least, in the first direction of rotation.

6. Device according to claim 5, wherein the said first ca mis formed of an elastic tongue (12), the first (15) and second (16) cam surfaces meeting at a free end of the tongue, and the other end of the tongue being interdependent of the first part (2), the second elastic means consisting in the tongue itself.

7. Device according to claim 6, wherein an abutment member is designed at the free end of the said elastic tongue in order to limit its movement in the second direction of oscillation when the cam follower finger rests upon the first cal surface under the action of the first elastic means.

8. Device according to any of claims 1 to 7, wherein the two parts (1,2) are moreover freely mobile in relative rotation between the second relative angular position and a third relative angular position located beyond the second relative angular position compared to the first relative angular position, unlockable blocking means (20,28) being designed to block the relative movement between the two parts when they are in their third relative angular position

9. Device according to claim 8, wherein the aforementioned blocking means comprises the cam follower finger (28) and a recess (20) formed in an element (9) interdependent of the first part (2) to the place where the cam follower finger is when the two parts are in their third relative angular position, so that the cam follower finger penetrates in the recess under the action of the first elastic means (25) when the two parts arrive into their third relative angular position

10. Device according to claim 9, wherein a third cam surface (19) is formed on an element (9) interdependent of the first part, arranged to cooperate with the cam follower finger (28) in order to retain the movement of the sliding element (24) under the action of the first elastic means (25), and to prevent the engagement of the two toothed segments (6, 27) when the two parts are in a relative angular position comprised between their second and third relative angular position coming from the second relative angular position.

11. Device according to any of claims 9 and 10, wherein means of unlocking of the means of blocking of the relative movement between the two parts when they are in their third relative angular position, comprises the tilted side (22) of the said recess (20) located on the side of the recess opposed to the third cam surface (19), arranged to cooperate with the cam follower finger (28) to push back the slide element (24) against the action of the first elastic means (25) when the relative movement between the two parts is continued beyond their third relative angular position against the action of third elastic means (13), and means of inhibition (23) to prevent the cam follower finger follower from returning into the recess when the two parts are brought back towards their third relative angular position

12. Device according to claim 11, wherein the inhibition means comprises a second oscillating cam (13, 23) arranged to be pushed back against the action of fourth elastic means (32) by the cam follower finger (28) when this latter cooperates with the tilted side (22) of the recess and to return onto the opening of the recess under the action of the fourth elastic means when the cam follower finger is out of the recess.

13. Device according to claim 12, wherein the second oscillating cam comprises a fourth cam surface (23) facing on the side opposed to the recess (20) in order to cooperate with the cam follower finger (28) when the two parts are in a relative angular position comprised between their second and third relative angular position coming from the third relative angular position in order to retain the movement of the sliding element (24) under the action of the first elastic means (25) and to prevent the engagement of the two toothed segments (6, 27).

14. Device according to any of claims 12 and 13, wherein the fourth elastic means comprises an helicoidal spring (32) whose axis is laid out approximately in circle arc centred on the relative rotation axis of the two parts, each end of said spring resting on an abutment (33, 34) which is interdependent of one of the two parts.

15. Armrest, in particular for seat of motor vehicle, **characterized by** the fact that it comprises a device of selective angular solidarisation according to any of claims 1 to 14, the aforementioned first relative angular position being that corresponding to the low position of the balustrade and the aforementioned second relative angular position being that corresponding to the highest of the positions of adjustment of the armrest.

16. Armrest according to claim 15, wherein an rotation axis (2) interdependent of the back of the seat constitutes the first one of the said two pieces, and an armrest frame (1) constitutes the second of the said two parts.

## Patentansprüche

1. Vorrichtung selektiver eckiger Solidarisierung von zwei Stücken (1,2) in relativer Umdrehung um eine Achse seit einer ersten relativen eckigen Position, wo die zwei Stücke in Schub für eine erste Drehrichtung bis zu wenigstens einer zweiten relativen eckigen Position sind, ein Bohrratschesystem, die zwischen besagt ersten und zweiten Positionen eine relative Bewegung schrittweise in der zweiten Drehrichtung erlauben und die die relative Bewegung in der ersten Drehrichtung verhindern, Mittel, die vorgesehen sind, um besagtes Bohrratschesystem auszukuppeln, wenn die zwei Stücke in ihre zweite relative eckige Position in der zweiten Drehrichtung ankommen, um eine freie relative Bewegung wenigstens zwischen den ersten und zweiten relativen eckigen Positionen zu erlauben, **dadurch gekennzeichnet, daß** besagtes Bohrratschesystem umfaßt :
- ein erster solidarischer mit einer Ersten (2) auf besagte zwei Stücke gezahnter Sektor (6), zentriert auf besagter Achse, und ein erster auf besagt erstem Stück aufgerichteter Nocken (15,16),
- ein auf dem zweiten Stück schiebend aufgerichteter Schieberelement (24), der einen zweiten gezahnten Sektor (27) die mit dem ersten gezahnten Sektor mitarbeiten kann und einen Nockenvolgenderfinger (28) trägt,
- erste Elastiksmittel (25), die angeordnet wurden, um auf dem Schieberelement eine Anstrengung auszuüben, die anstrebt, die ersten und zweiten gezahnten Sektoren in Ineinandergreifen zu führen,
die Zähne der ersten und zweiten gezahnten Sektoren (6,27) die beziehungsweise angeordnet werden, so daß, wenn die ersten und zweiten gezahnten Sektoren (6,27), in Ineinandergreifen durch Einwirkung der ersten Elastiksmittel (25) sind, die Zähne des ersten und des zweiten Sektoren die relative Bewegung in der ersten Drehrichtung blockieren, aber der relativen Bewegung schrittweise in der zweiten Drehrichtung erlauben, indem sie dem zweiten Sektor (27) erlauben, an der Abweichung des ersten Sektor (6) gegen die Aktion der ersten Elastiksmittel (25) zurückgedrängt zu werden,
der erste Nocken (15,16) der angeordnet wird, um mit dem Nockenvolgenderfinger (28) mitzuarbeiten, so daß die ersten und zweiten gezahnten Sektoren (6,27), in Ineinandergreifen kommen, sobald die zwei Stücke (1,2), in ihre erste relative Position kommen, und außerhalb des Ineinandergreifens, sobald die zwei Stücke (1,2), in ihre zweite relative Position kommen.

2. Vorrichtung nach Anspruch 1, **dadurch gekennzeichnet, daß** der besagt erster Nocken umfaßt :
- eine erste Nockenoberfläche (15), der, wenn der Nockenvolgenderfinger (28), in Unterstützung auf dieser ersten Oberfläche durch Einwirkung der ersten Elastiksmittel (25) ist, hindert den zweiten gezahnten Sektor (27) daran zu kommen, mit dem ersten Sektor (6) einzurücken,
- ein erstes Entgehungsmittel (18), der, wenn die zwei Stücke in ihrer ersten relativen eckigen Position sind, erlaubt dem Nockenvolgenderfinger, der ersten Nockenoberfläche zu entgehen
- ein erstes Einrastmittel (16), das, wenn die zwei Stücke in ihrer zweiten relativen eckigen Position sind, erlaubt dem Nockenvolgenderfinger, in Kontakt mit der ersten Nockenoberfläche zu kommen, wenn die relative Bewegung der zwei Stücke von Zweiten zur ersten Drehrichtung übergeht.

3. Vorrichtung nach Anspruch 2, **dadurch gekennzeichnet, daß** das erste Entgehungsmittel eine Unterbrechung (18) der ersten Nockenoberfläche umfaßt, am Ort wo der Nockenvolgenderfinger (28) sich befindet, wenn die zwei Stücke in ihrer ersten relativen eckigen Position sind.

4. Vorrichtung nach irgendeinem von Ansprüche 2 und 3, **dadurch gekennzeichnet, daß** der erste Nocken (15,16), oszillierend auf besagt erstem Stück (2) aufgerichtet wird, und die ersten Einrastmittel eine zweite Nockenoberfläche (16) umfassen, die angeordnet wurde, um mit dem Nockenvolgenderfinger (28) mitzuarbeiten, um eine Oszillation des ersten Nockens gegen die Aktion zweiter Elastiksmittel (12) zu verursachen

5. Vorrichtung nach Anspruch 4, **dadurch gekennzeichnet, daß** die Erste (15), und die zweiten (16), Nockenoberflächen sich an einem ersten Ende des ersten Nockens wieder treffen, wo der Nockenvolgenderfinger sich befindet, wenn die zwei Stücke in ihrer zweiten relativen eckigen Position sind, so daß, wenn die zwei Stücke sich schrittweise ihrer zweiten relativen eckigen Position in der zweiten Drehrichtung nähern, der erste Nocken (15,16), in einer ersten Direktion wegen der Aktion des Nockenvolgenderfinger (28) auf der zweiten Nockenoberfläche (16) oszilliert, dann oszilliert in der zweiten Direktion durch Einwirkung der zweiten Elastiksmittel (12), wenn der Nockenvolgenderfinger erreicht besagtes Ende des ersten Nockens, und den der Nockenvolgenderfinger sich auf der ersten Nockenoberfläche (15) verpflichtet, wenn die relative Bewegung der zwei Stücke umgedreht wird, und daß die zwei Stücke sich frei zunächst wenigstens die erste Drehrichtung fortbewegen

6. Vorrichtung nach Anspruch 5, **dadurch gekennzeichnet, daß** der besagt erster Nocken aus einer elastischen Feder (12) ausgebildet ist, die ersten (15) und zweiten (16) Nockenoberflächen sich an einem freien Ende der Feder wieder treffen und das andere Ende der Feder solidarisch mit dem ersten Stück (2) ist, die zweiten Elastiksmittel durch die Feder selbst gebildet werden.

7. Vorrichtung nach Anspruch 6, **dadurch gekennzeichnet, daß** ein Schub am freien Ende der elastischen Feder vorgesehen ist, um seine Bewegung im zweiten Oszillationsdirektion zu begrenzen, wenn der Nockenvolgenderfinger in Unterstützung auf der ersten Nockenoberfläche durch Einwirkung der ersten Elastiksmittel ist.

8. Vorrichtung nach irgendeinem von Ansprüche 1 bis 7, **dadurch gekennzeichnet, daß** die zwei Stücke (1,2), außerdem frei beweglich in relativer Umdrehung zwischen der zweiten relativen eckigen Position und eine dritte relative eckige Position sind, die über die zweite relative eckige Position hinsichtlich der ersten relativen eckigen Position hinaus angesiedelt ist, entriegelnden Blockiermittel (20,28) die vorgesehen sind, um die relative Bewegung zwischen den zwei Stücken zu blockieren, wenn sie in ihrer dritten relativen eckigen Position sind.

9. Vorrichtung nach Anspruch 8, **dadurch gekennzeichnet, daß** besagte Blockiermittel den Nockenvolgenderfinger (28) umfassen, und eine Vertiefung (20), die in einem mit dem ersten Stück (2) solidarischen Organ (9) gebildet wurde, am Ort wo der Nockenvolgenderfinger sich befindet, wenn die zwei Stücke in ihrer dritten relativen eckigen Position sind, so daß der Nockenvolgenderfinger in der Vertiefung durch Einwirkung der ersten Elastiksmittel (25) eindringt, wenn die zwei Stücke in ihre dritte relative eckige Position ankommen.

10. Vorrichtung nach Anspruch 9, **dadurch gekennzeichnet, daß** eine dritte Nockenoberfläche (19), auf einem mit dem ersten Stück solidarischen Organ (9) gebildet wird, das angeordnet wurde, um mit dem Nockenvolgenderfinger (28) mitzuarbeiten, um die Bewegung des Schieberelement (24) durch Einwirkung der ersten Elastiksmittel (25) zurückzuhalten, und das Ineinandergreifen der zwei gezahnten Sektoren (6,27) zu verhindern, wenn die zwei Stücke in einer relativen eckigen Position sind, die zwischen ihrem Zweites und ihrer drittes relativen eckigen Position ist, indem sie von der zweiten relativen eckigen Position kommen.

11. Vorrichtung nach irgendeinem von Ansprüche 9 und 10, **dadurch gekennzeichnet, daß** Entriegelungsmittel für Entriegelung der Mittel des Blockierens der relativen Bewegung zwischen den zwei Stücken, wenn sie in ihrer dritten relativen eckigen Position sind, die schräge Flanke (22) der besagte Vertiefung (20) umfasst, die der dritten Nockenoberfläche (19) entgegengesetzt wurde, die angeordnet wurde, um mit dem Nockenvolgenderfinger (28) mitzuarbeiten, um den Schieberelement (24) gegen die Aktion der ersten Elastiksmittel (25) zurückzudrängen, wenn die relative Bewegung zwischen den zwei Stücken über ihre dritte relative eckige Position gegen die Aktion einer dritter Elastiksmittel (13) hinaus verfolgt wird, und Inhibitionsmittel (23), um den Nockenvolgenderfinger daran zu hindern, in die Vertiefung zurückzukommen, wenn die zwei Stücke in Richtung ihrer dritten relativen eckigen Position zurückgebracht werden.

12. Vorrichtung nach Anspruch 11, **dadurch gekennzeichnet, daß** die Inhibitionsmittel einen zweiten oszillierenden Nocken (13,23) umfassen, der angeordnet wurde, um gegen die Aktion von vierter Elastiksmittel (32) durch den Nockenvolgenderfinger (28) zurückgedrängt zu werden, wenn letztere mit der schrägen Flanke (22) der Vertiefung mitarbeitet, und um auf die öffnung der Vertiefung durch Einwirkung der vierten Elastiksmittel zurückzukommen, wenn der Nockenvolgenderfinger aus der Vertiefung herausgekommen ist.

13. Vorrichtung nach Anspruch 12, **dadurch gekennzeichnet, daß** der zweite oszillierende Nocken eine vierte Nockenoberfläche (23) umfaßt, die von notiert entgegengesetzt der Vertiefung (20) bewältigt, um mit dem Nockenvolgenderfinger (28) mitzuarbeiten, wenn die zwei Stücke in einer relativen eckigen Position, die zwischen ihrer Zweiten und ihrer dritten relativen eckigen Position ist, indem sie von der dritten relativen eckigen Position kommen, um die Bewegung des Schieberelement (24) durch Einwirkung der ersten Elastiksmittel (25) zurückzuhalten, und das Ineinandergreifen der zwei gezahnten Sektoren (6,27) zu verhindern.

14. Vorrichtung nach irgendeinem von Ansprüche 12 und 13, **dadurch gekennzeichnet, daß** die vierten Elastiksmittel eine Schraubenfeder (32) umfassen, deren Achse merklich in Kreisbogen verfügt wird, der auf die Achse relativer Drehung der zwei Stücke ausgerichtet ist, Feder, deren jedes Ende in Unterstützung auf einem mit einem der zwei Stücke solidarischen Schub (33,34) ist

15. Armlehne, insbesondere für Autofahrzeugsitz, **dadurch gekennzeichnet, daß** er eine Vorrichtung selektiver eckiger Solidarisierung nach irgendeiner einer von Ansprüche 1 bis 14 umfaßt, besagt erste relative eckige Position, die jene der besagten niedrigen Position der Armlehne und entsprech ist, zweite relative eckige Position, die jene dem höchsten von den Positionen der Einstellung der Armlehne entsprech ist.

16. Armlehne nach Anspruch 15, **dadurch gekennzeichnet, daß** eine mit der Akte des Sitzes solidarische Drehachse (2), die Erste der zwei Stücke darstellt, und ein Gerüst (1) der Armlehne, das Zweite der zwei Stücke darstellt.
